Europäisches Patentamt

(19) European Patent Office

Office européen des brevets

(11) Numéro de publication : **0 331 557 B1**

(12) **FASCICULE DE BREVET EUROPEEN**

(45) Date de publication du fascicule du brevet :
16.10.91 Bulletin 91/42

(51) Int. Cl.⁵ : **G01P 15/10**

(21) Numéro de dépôt : **89400481.1**

(22) Date de dépôt : **21.02.89**

(54) Accéléromètre pendulaire non asservi à poutre résonante.

(30) Priorité : **22.02.88 FR 8802079**

(43) Date de publication de la demande :
**06.09.89 Bulletin 89/36**

(45) Mention de la délivrance du brevet :
**16.10.91 Bulletin 91/42**

(84) Etats contractants désignés :
**CH DE ES GB IT LI NL SE**

(56) Documents cités :
FR-A- 2 192 306
GB-A- 1 596 982
GB-A- 2 162 314

(56) Documents cités :
**PROCEEDINGS OF THE 40TH ANNUAL FRE-
QUENCY SYMPOSIUM 1986, Philadelphia,
Pennsylvania, 1986, pages 230-236, IEEE, New
York, US; W.J. KASS et al.: "Double-ended
tuning fork quartz accelerometer"
IEEE TRANSACTIONS ON ELECTRON DEVI-
CES, vol. ED-26, no. 12, décembre 1979, pages
1911-1917, IEEE, New York, US; L.M. ROY-
LANCE et al.: "A batch-fabricated silicon
accelerometer"**

(73) Titulaire : **SOCIETE D'APPLICATIONS
GENERALES D'ELECTRICITE ET DE
MECANIQUE SAGEM
6, Avenue d'Iéna
F-75783 Paris Cédex 16 (FR)**

(72) Inventeur : **Amand, Yvon
24 Allée Mozart
F-95230 Soisy sous Montmorency (FR)**

(74) Mandataire : **Fort, Jacques
CABINET PLASSERAUD 84, rue d'Amsterdam
F-75009 Paris (FR)**

**Description**

La présente invention concerne les accéléromètres pendulaires non asservis du type comportant une masse sismique pendulaire reliée à un socle par une articulation lui permettant de débattre dans la direction d'un axe sensible et un capteur de force à poutre résonante reliant la masse au socle et munie d'électrodes de mise en vibration.

On connaît déjà de nombreux accéléromètres comportant une masse sismique pendulaire et un capteur de force constitué par une poutre reliant la masse à un socle, les variations de la fréquence de résonance de la poutre constituant une représentation de l'accélération appliquée le long de l'axe sensible. On connaît en particulier un tel accéléromètre (US-A-4517841 SUNDSTRAND DATA CONTROL) dont la poutre vibrante est placée de façon que les accélérations suivant l'axe sensible se traduisent par des contraintes de compression ou de traction dans la poutre placée parallèlement à cette direction. On connaît également (KASS et autres, Double-ended tuning fork quartz accelerometer, CH2330-9/86/0000-0230, 1986 IEEE) un accéléromètre dans lequel une masse simisque est reliée à un socle uniquement par deux poutres qui l'encadrent.

Ces accéléromètres ont l'intérêt d'être robustes et de coût modéré.

La présente invention vise à fournir un accéléromètre qui, tout en conservant et même en renforçant ces qualités, ait une sensibilité accrue, un volume réduit, une résistance élevée à des accélérations dépassant largement la plage de mesure et un coût faible. Elle propose dans ce but un accéléromètre du type ci-dessus défini, caractérisé en ce que le capteur comporte au moins deux poutres vibrantes en matériau piézo-électrique fixées à une extrémité au socle, munies d'électrodes de mise en vibration à fréquence de résonance, les poutres étant placées symétriquement par rapport à la masse, étant fixées à la masse à l'extrémité opposée au socle et étant orientées perpendiculairement à l'axe sensible.

Les électrodes sont reliées à un circuit comportant un oscillateur s'accordant sur la fréquence de résonance de la poutre ou de chaque poutre, et des moyens permettant de mesurer cette fréquence de résonance. Ces moyens fournissent avantageusement en sortie un signal numérique représentatif de la fréquence et donc de l'accélération.

L'invention trouve de nombreuses applications, notamment chaque fois que l'on souhaite disposer d'un accéléromètre ayant un encombrement faible, réalisable en série à bas prix, capable de fournir des mesures significatives dans une plage d'accélération importante et pouvant supporter des accélérations très supérieures aux accélérations à mesurer. Parmi les domaines d'application de tels dispositifs on peut notamment citer les engins et obus guidés ou auto-guidés dans lesquels l'accéléromètre est utilisé une seule fois et où une condition essentielle à remplir est la résistance aux accélérations élevées subies lors du tir, et l'industrie automobile où le coût est un critère dominant.

Suivant la condition à remplir en priorité, on adoptera l'un ou l'autre de divers modes de réalisation possibles.

Dans un mode particulier de réalisation, deux poutres sont placées de part et d'autre de la masse dans la direction de l'axe sensible, à une distance mutuelle dans la direction de l'axe sensible très inférieure à la largeur et à la longueur de la masse. Cette solution permet de constituer un accéléromètre extrêmement plat et de faible volume.

Dans tous les cas, on peut obtenir une amplification mécanique favorable à la sensibilité du système.

L'invention sera mieux comprise à la lecture de la description qui suit de modes particuliers de réalisation, donnés à titre d'exemples non limitatifs. La description se réfère aux dessins qui l'accompagnent, dans lesquels :

— la figure 1 est un schéma de principe, en coupe, d'une constitution possible de la partie mécanique d'un accéléromètre suivant un mode de réalisation de l'invention ;

— la figure 2 est une vue en perspective de la plaque médiane de l'accéléromètre de la figure 1, comportant la masse sismique, munie de son capteur ;

— la figure 3 est un schéma montrant la constitution de principe d'un demi-capteur à poutres vibrantes utilisable dans l'accéléromètre de la figure 1, et des circuits électriques associés ;

— la figure 4 représente l'ensemble de l'accéléromètre montré sur la figure 1, en perspective et en coupe partielle ;

— la figure 5, similaire à la figure 1, montre un autre mode encore de réalisation ;

— la figure 6 est une vue en perspective de la plaque centrale de l'accéléromètre de la figure 5 ;

— la figure 7 est une vue en coupe suivant la ligne VII-VII de la figure 5, montrant l'ensemble de la partie mécanique de l'accéléromètre ;

— la figure 8 est une vue éclatée de la partie active d'une variante des figures 5 à 7.

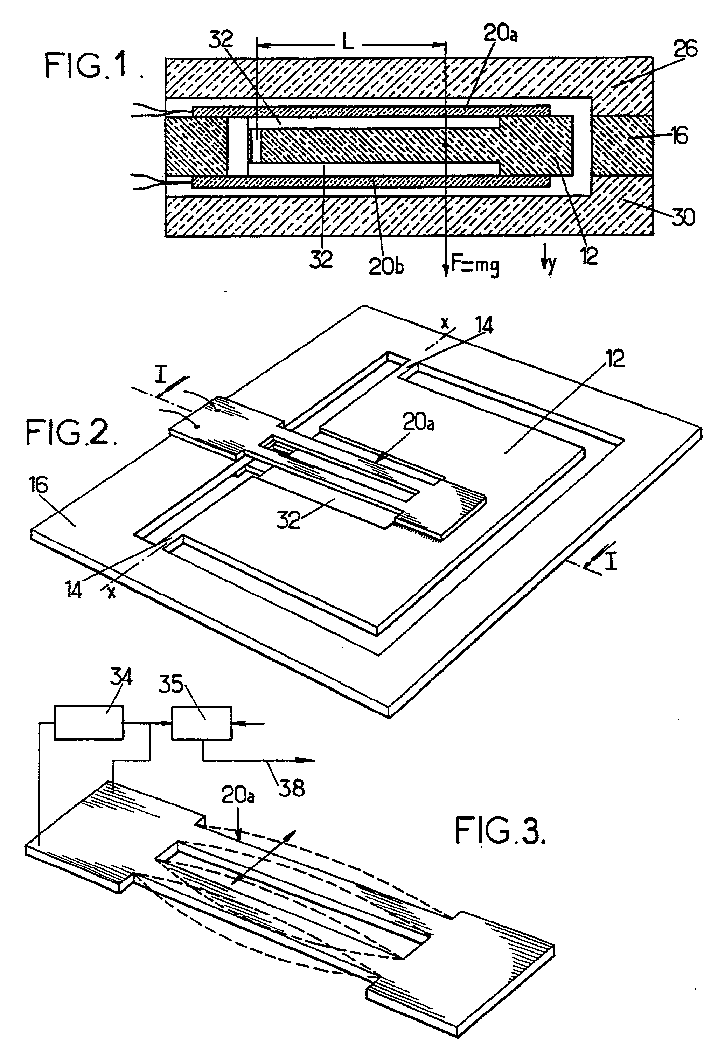

L'accéléromètre dont la constitution de principe est montrée en figures 1 à 3 a l'avantage d'une grande simplicité de réalisation car, comme on le verra, sa partie mécanique se limite à trois pièces pouvant être usinées en mode collectif à partir de tranches de quartz, par photolithographie.

Sur les figures 1 à 3, l'accéléromètre comporte une masse sismique 12 reliée à un socle 16 par deux charnières constituant une articulation 14 autour d'un axe x. L'axe sensible est dirigé suivant y, perpendiculairement à l'axe x. Le socle appartient à un cadre entourant complètement la masse et destiné à s'appliquer contre deux flasques 26 et 30 pour constituer une cellule accélérométrique qui peut être étanche.

Sous l'action d'une accélération g, la masse 12 est soumise à un moment par rapport à l'axe x égal à mgL (L étant la distance entre l'articulation et le centre de gravité de la masse).

Du fait de leur faible longueur, les charnières n'opposent pratiquement aucun couple résistant au débattement de la masse. Mais, du fait de leur écartement, elles ont une bonne résistance aux efforts et aux chocs dans la direction x.

L'accéléromètre comporte un capteur à poutres vibrantes orientées perpendiculairement à la direction y et à la direction de l'articulation x, ce qui permet, comme on le verra, d'obtenir une amplification mécanique.

Le capteur est constitué par une paire de poutres 20a et 20b en forme de lames, identiques, parallèles l'une à l'autre, encadrant la masse 12 dans la direction de l'axe sensible y. Chaque poutre a une extrémité fixée à plat sur le socle 16 de façon à présenter avec lui une liaison assimilable à un encastrement. L'autre extrémité de chaque poutre est fixée à plat sur la masse 12 par une liaison également assimilable à un encastrement. Un évidement 32 ménagé dans cette masse, par attaque chimique par exemple, permet à chaque poutre de vibrer sans être gênée par la masse.

Pour expliquer l'effet d'amplification mécanique de façon simple, on supposera tout d'abord que l'accéléromètre est orienté de façon que la direction sensible y soit parallèle à l'accélération terrestre +g. La masse sismique m est alors soumise, au repos, à un moment mgL = FL (L désignant la distance entre le centre de gravité de la masse 12 et l'axe d'articulation x). Ce moment est équilibré par les forces f que doivent exercer les poutres pour maintenir la masse sismique pendulaire 12 en équilibre. La force f est reliée à l'accélération g appliquée à l'accéléromètre par la relation 2fh = mgL, h étant le bras de levier du couple de rappel, sensiblement égal à la demi-épaisseur de la masse.

On voit que ce montage réalise une amplification de force, de gain égal au rapport L/2h, ce qui augmente considérablement la sensibilité de l'appareil. Du fait de cette sensibilité accrue, il est possible de substituer, aux masses métalliques couramment utilisées jusqu'ici, une masse en quartz à faible densité.

Les poutres 20a et 20b seront généralement réalisées en quartz, qui a l'avantage de propriétés piézoélectriques bien connues et stables, d'être facilement disponible et de pouvoir être mis en forme par des procédés de prix de revient faible, tels que la photolithogravure. Les poutres présenteront généralement une forme de lame d'épaisseur comprise entre 127 et 500 µm et de longueur totale comprise entre 5 et 15 mm.

Les poutres peuvent avoir diverses constitutions.

Dans le mode de réalisation montré en figures 2 et 3, chaque poutre, 20a par exemple, a une constitution de double diapason du genre décrit par exemple dans les documents antérieurs US-A-3238789 (SERA) ou 4215570 (EER NISSE). Chaque poutre est associée à un oscillateur 34. Un circuit 35 de mesure de différence de fréquence, par exemple par battements, prélève un signal sur chacun des deux oscillateurs et fournit en sortie 38 un signal numérique de différence de fréquence. Du fait que l'une des poutres est en compression lorsque l'autre est en traction, on double le décalage de fréquence par rapport à la valeur au repos et au surplus le fonctionnement en différentiel permet d'éliminer divers défauts, en particulier ceux liés à la réponse thermique des lames et aux non-linéarités.

Les deux poutres présentant sensiblement la même loi de variation de la fréquence de résonance en fonction de la température et étant situées à proximité immédiate l'une de l'autre, l'influence de la température est pratiquement nulle, surtout si les deux poutres ont été découpées dans une même tranche.

Les poutres 20a et 20b peuvent être fixées par collage, thermocompression, soudure composite ou tout autre procédé de solidarisation évitant les risques de séparation. Les fils de liaison avec le circuit peuvent être fixés à des électrodes en chrome recouvert d'or, déposées sur les poutres par collage à la colle conductrice ou par thermocompression.

Il faut remarquer que la structure montrée en figures 1 et 2 est très différente de celle décrite dans l'article de KASS mentionné ci-dessus, du fait que cette dernière n'a pas de masse pendulaire à un seul degré de liberté (oscillation autour de l'axe x). Du fait de l'absence de charnière, la masse sismique agit sur les deux lames sous n'importe quel angle d'application de l'accélération et des termes d'erreur apparaissent, dûs à la dissymétrie de réponse des deux poutres du capteur.

On voit que l'ensemble mécanique qui vient d'être décrit peut être extrêmement plat et de plus est susceptible d'être fabriqué par des procédés photolithographiques, y compris les poutres, ce qui constitue un ensemble très homogène et élimine les problèmes de dilatation thermique différentielle.

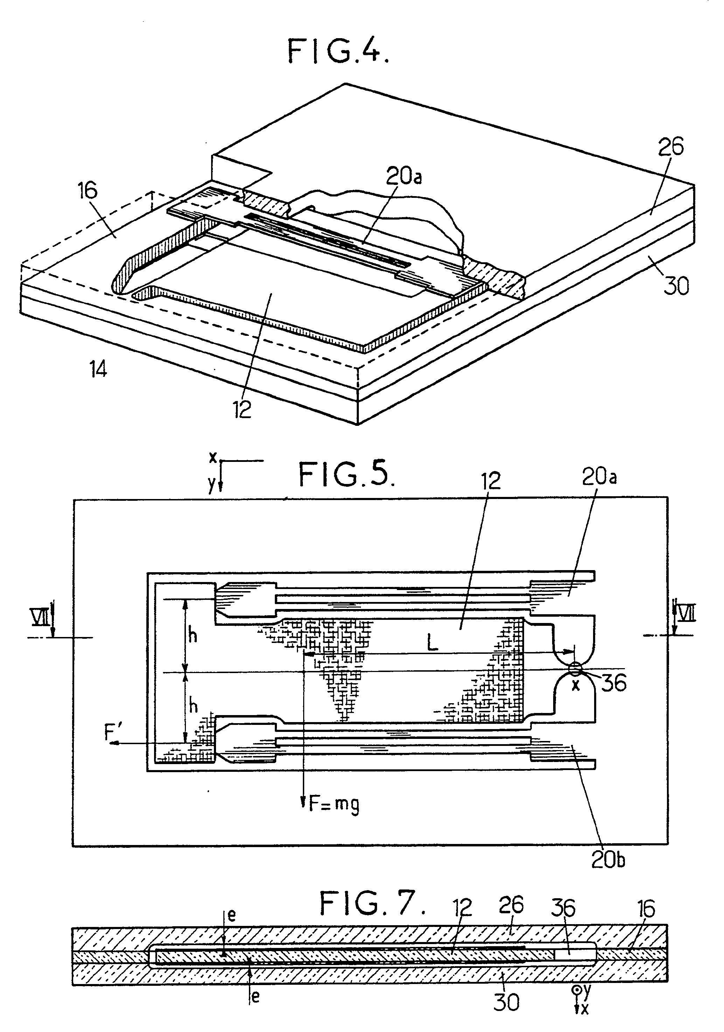

La partie mécanique de l'accéléromètre qui vient d'être décrit peut avoir la constitution réelle montrée en figure 4. Les deux flasques 26 et 30 constituent avec le cadre un boîtier. La partie centrale regroupant le cadre et la masse pendulaire 12 peut être usinée dans une tranche de quartz. Une fois les poutres 20a et 20b fixées au socle et à la masse pendulaire, l'ensemble peut être enserré entre les deux flasques et l'ensemble peut être collé. Il est très facile d'usiner des évidements de quelques microns de profondeur dans les flasques par usinage chimique, pour ménager l'intervalle nécessaire au débattement de la masse sismique.

A titre d'exemple, on peut indiquer qu'un accéléromètre du type montré en figure 4 a été réalisé pour mesurer des accélérations dans la plage allant de +100 g à −100 g. L'encombrement plan était de l'ordre de 7 mm × 7 mm et la partie mécanique pouvait supporter sans dommage des accélérations de plusieurs milliers de fois l'accélération de la pesanteur quelle que soit la direction d'application de la force, à condition que le débattement e soit faible. Si l'accéléromètre comporte un boîtier étanche contenant un gaz inerte (hélium ou argon) sous pression réduite, le jeu faible joue un rôle d'amortisseur gazeux et limite l'amplitude des déplacements.

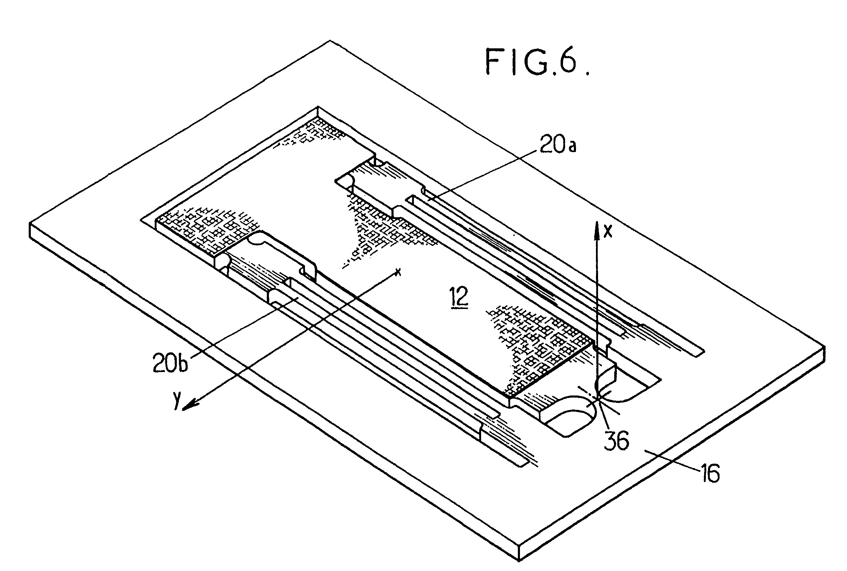

Le mode de réalisation montré en figures 5 à 7 se différencie du précédent essentiellement en ce que l'axe d'articulation x est perpendiculaire aux grandes faces de la masse pendulaire 12, de forme plate. Les deux poutres 20a et 20b encadrant la masse 12 peuvent alors être réalisées d'une seule pièce avec le cadre comportant le socle 16 et avec la masse 12 par découpe d'une même tranche de matériau piézoélectrique, généralement le quartz. Les poutres représentées schématiquement sur les figures 5 à 7 sont, comme dans le cas précédent, du type en double diapason. Deux flasques 26 et 30 dans lesquels ont été usinés des évidements de profondeur e délimitent une chambre où le débattement dans un sens ou dans l'autre de la masse pendulaire 12 est limité à la valeur e. La masse sismique pendulaire, en forme de T et limitée par un amincissement 36 constituant charnière, peut être alourdie par dépôt de métal lourd, par exemple par un dépôt galvanique d'or de quelques microns à quelques dizaines de microns d'épaisseur.

La solution montrée en figures 5 à 7 permet de réaliser un accéléromètre de forme extrêmement plate et peu coûteux, se prêtant particulièrement bien à une utilisation dans des munitions ou dans l'industrie automobile pour les centrales de guidage ou de surveillance de trajet.

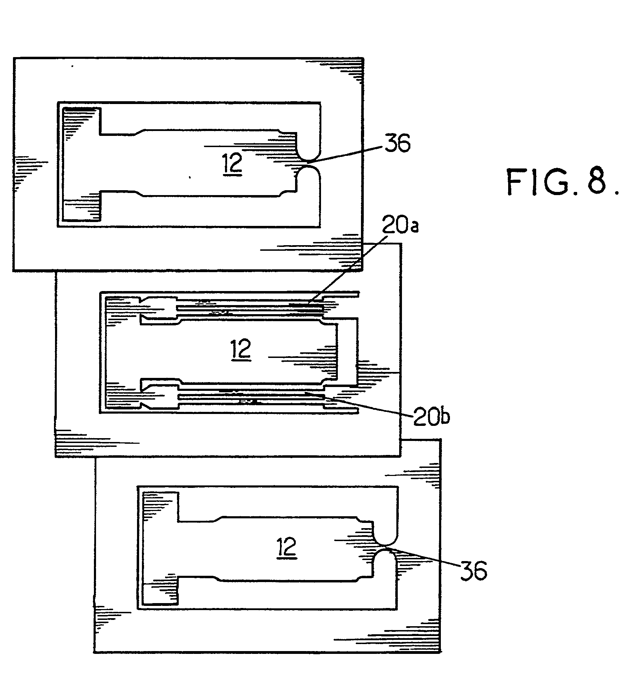

Lorsque l'accéléromètre est susceptible d'être soumis à des accélérations ou à des chocs pouvant faire travailler la charnière 36 en torsion, il peut être avantageux d'utiliser la variante de réalisation montrée en figure 8 sous forme éclatée. Dans ce cas la pièce centrale monobloc des figures 5 à 7 est remplacée par un empilement de trois feuilles, les deux feuilles extrêmes étant identiques et portant une fraction de masselotte reliée par une charnière 36 à un cadre tandis que la feuille centrale comporte une fraction de masse sismique 12 démunie de charnière et le capteur, constitué des poutres 20a et 20b.

Les capteurs constitués d'une ou plusieurs poutres en double diapason décrites jusqu'ici peuvent être remplacés par des capteurs à poutres travaillant en tension ou en compression d'un genre différent. Par exemple il est possible de substituer aux poutres en double diapason une poutre à deux fentes longitudinales du genre montré dans le document EP-A-0130705. On peut également utiliser des structures de poutre réalisables par des techniques autres que la photolithogravure, telles que celles décrites dans le document FR-A-2574209, au moins dans le cas du mode de réalisation des figures 1 à 4.

## Revendications

1. Accéléromètre pendulaire non asservi comportant une masse sismique pendulaire (12) reliée à un socle (16), par une articulation (14) lui permettant de débattre dans la direction d'un axe sensible et un capteur de force à poutre résonante (20a, 20b) reliant la masse au socle et munie d'électrodes de mise en vibration destinées à être couplées à un oscillateur et à un circuit de mesure de fréquence, caractérisé en ce que le capteur comporte au moins deux poutres vibrantes (20a, 20b) en matériau piézoélectrique, fixées à une extrémité au socle (16) et à l'autre extrémité à la masse, munies d'électrodes de mise en vibration à fréquence de résonance, orientées perpendiculairement à l'axe sensible et placées symétriquement par rapport à la masse de part et d'autre de l'articulation, pour que l'application d'une accélération suivant l'axe sensible qui crée des contraintes de traction dans une poutre crée ces contraintes de compression dans l'autre.

2. Accéléromètre selon la revendication 1, caractérisé en ce que l'articulation est définie par des charnières placées de chaque côté de la masse pendulaire.

3. Accéléromètre selon la revendication 1 ou 2, caractérisé en ce que les deux poutres (20a, 20b) sont placées de part et d'autre de la masse sismique pendulaire à une distance mutuelle, dans la direction de l'axe sensible, très inférieure à la largeur et à la longueur de la masse.

4. Accéléromètre selon la revendication 3, caractérisé en ce que la masse sismique et le socle constituent une même pièce, le socle étant complété par un cadre entourant la masse sismique.

5. Accéléromètre suivant la revendication 3 ou 4, caractérisé en ce qu'il comporte un boîtier constitué de deux flasques (26, 30) appliqués sur le cadre de part et d'autre de la masse sismique (12) dans lesquels sont ménagés des évidements de débattement de la masse.

6. Accéléromètre selon la revendication 1 ou 2, caractérisé en ce que la masse sismique pendulaire est de forme plate et reliée au support par une charnière d'articulation suivant un axe perpendiculaire aux grandes surfaces de la masse et en ce que les deux poutres sont placées de part et d'autre de la masse dans le sens de la largeur de cette dernière.

7. Accéléromètre selon la revendication 6, caractérisé en ce que les poutres, la masse sismique et le socle sont constitués par usinage d'une même tranche de quartz.

8. Accéléromètre selon la revendication 5, 6 ou 7, caractérisé en ce que la masse sismique porte un revêtement de métal lourd, tel que l'or.

**Patentansprüche**

1. Servoloser Pendelbeschleunigungsmesser mit einer durch ein Gelenk (14) mit einem Sockel (16) verbundenen seismischen Pendelmasse (12), die sich in Richtung einer empfindlichen Achse bewegen kann, und mit einem Kraftsensor mit Resonanzträger (20a, 20b), der die Masse mit dem Sockel verbindet und mit Elektroden zum Messen von Schwingungen versehen ist, welche mit einem Oszillator und einer Frequenzmeßschaltung verbunden sind, dadurch gekennzeichnet, daß der Sensor wenigstens zwei Schwingungsträger (20a, 20b) aus piezoelektrischem Material aufweist, welche an einem Ende am Sockel (16) und am anderen Ende an der Masse befestigt sind und mit Elektroden zur Messung einer Resonanzfrequenzschwingung versehen sind, welche rechtwinklig zur empfindlichen Achse orientiert und im Verhältnis zur Masse symmetrisch beiderseits des Gelenkes angeordnet sind, um eine Beschleunigung entlang der empfindlichen Achse hervorzurufen, die Zugspannungen in einem Träger und Druckspannungen im anderen Träger bewirkt.

2. Beschleunigungsmesser nach Anspruch 1, dadurch gekennzeichnet, daß die Gelenkverbindung von Scharniergelenken gebildet ist, welche beiderseits der Pendelmasse angeordnet sind.

3. Beschleunigungsmesser nach Anspruch 1 oder 2, dadurch gekennzeichnet, daß die beiden Träger (20a, 20b) beiderseits der seismischen Pendelmasse mit gegenseitigem Abstand in der Richtung der empfindlichen Achse angeordnet sind, wobei der Abstand wesentlich geringer als die Breite und Länge der Masse ist.

4. Beschleunigungsmesser nach Anspruch 3, dadurch gekennzeichnet, daß die seismische Masse und der Sockel einstückig ausgebildet sind, wobei der Sockel durch einen die seismische Masse umgebenden Rahmen vervollständigt ist.

5. Beschleunigungsmesser nach Anspruch 3 oder 4, dadurch gekennzeichnet, daß dieser ein Gehäuse aufweist, das von zwei Flanschflächen (26, 30) gebildet ist, welche auf dem Rahmen beiderseits der seismischen Masse (12) befestigt sind und in denen Ausnehmungen für die Bewegung der Masse ausgespart sind.

6. Beschleunigungsmesser nach Anspruch 1 oder 2, dadurch gekennzeichnet, daß die seismische Pendelmasse eine flache Form aufweist und mit der Stütze durch ein Scharniergelenk entlang einer senkrecht zu den großen Flächen der Masse befindlichen Achse verbunden ist und daß die zwei Träger beiderseits der Masse in Richtung der Breite dieser Masse angeordnet sind.

7. Beschleunigungemesser nach Anspruch 6, dadurch gekennzeichnet, daß die Träger, die seismische Masse und der Sockel durch Bearbeitung einer einzigen Quarzscheibe gebildet sind.

8. Beschleunigungsmesser nach Anspruch 5, 6 oder 7, dadurch gekennzeichnet, daß die seismische Masse eine Beschichtung aus einem schweren Metall, wie Gold, trägt.

**Claims**

1. Non-servoed pendular accelerometer comprising a pendular seismic mass (12) connected to a base (16) by a hinged connection (14) for movement in the direction of a sense axis and a resonating beam force sensor (20a, 20b) connecting the mass to the base and provided with vibration electrodes for connection with an oscillator and with a frequency measurement circuit, characterized in that the sensor comprises at least two vibrating beams (20a, 20b) of piezoelectric material, having an end secured to the base (16) and the other end connected to the mass, provided with electrodes for vibration at the resonance frequency, directed perpendicularly to the sense axis and located symmetrically with respect to the mass on both sides of the hinged connection, whereby an acceleration applied along the sense axis, which generates tractive stresses in one beam, generates compression stressee in the other beam.

2. Accelerometer according to claim 1, characterized in that the hinged connection is defined by hinges placed each on one side of the pendular mass.

3. Accelerometer according to claim 1 or 2, characterized in that the two beams (20a, 20b) are located each on one side of the pendular seismic mass and at a mutual distance, in the direction of the sense axis, much lower than the width and the length of the mass.

4. Accelerometer according to claim 3, characterized in that the seismic mass and the base constitute a same part, the base being completed with a frame surrounding the seismic mass.

5. Accelerometer according to claim 3 or 4, characterized in that it comprises a housing constituted of two plates (26, 30) applied on the frame on both sides of the seismic mass (12), wherein chambers for movement of said mass are formed.

6. Accelerometer according to claim 1 or 2, characterized in that the pendular seismic mass is of flat shape and is connected to the base by a hinge for pivotal movement about an axis perpendicular to the larger surfaces of the mass and in that the two beams are placed one of each side of the width of the mass.

7. Accelerometer according to claim 6, characterized in that the beams, the seismic mass and the base are formed by machining a same quartz wafer.

8. Accelerometer according to claim 5, 6 or 7, characterized in that the seismic mass carries a coating of a heavy metal, such at gold.

FIG.1.

FIG.2.

FIG.3.

# FIG.4.

# FIG.5.

# FIG.7.

FIG.6.

FIG. 8.